# EUROPÄISCHE PATENTANMELDUNG

(11) **EP 0 911 191 A2**
(43) Veröffentlichungstag der Anmeldung: **28.04.1999**
(21) Anmeldenummer: 98250375.7
(22) Anmeldetag: 23.10.1998
(51) Int. Cl.: B60C 27/08

(54) **Reifenkette**

(30) Priorität: 24.10.1997 DE 29719669 U
(71) Anmelder: RUD-KETTENFABRIK RIEGER & DIETZ GMBH U. CO., 73432 Aalen-Unterkochen (DE)
(72) Erfinder: Deger, Werner, 73466 Lauchheim (DE)
(74) Vertreter: Böning, Manfred, Dr.-Ing.

(57) **Zusammenfassung**

Um bei einer Reifenkette zwei miteinander zu koppelnde Kettenstrangabschnitte (1) auch dann problemlos miteinander verbinden bzw. lösen zu können, wenn der Bewegungsspielraum im Bereich der Fügestelle gering ist, werden als Kopplungsorgane ein Endglied (12) mit drei über Buge (13,14,15) miteinander verbundenen Schenkeln (16,17,18) und ein Verbindungselement (5) mit einem Verankerungsstück (7) vorgeschlagen, das in der Draufsicht betrachtet im wesentlichen die Form eines Trapezes hat und das eine Stützfläche für einen Schenkel (16) des vorgenannten Endgliedes (12) aufweist, die die Lage der Kopplungsorgane im gekoppelten Zustand sichert.

## Beschreibung

Die Erfindung betrifft eine Reifenkette, insbesondere Gleitschutzkette mit Kettenstrangabschnitten, deren Endglieder im Bereich mindestens einer Füge- bzw. Teilungsstelle durch ein Verbindungselement miteinander koppelbar sind, das eine Anschlußöse für das Endglied eines ersten Kettenstrangabschnittes und ein mit der Anschlußöse über ein Rückenteil verbundenes mit einem Kopf versehenes Verankerungsstück aufweist, welch letzteres in einer von der gemeinsamen Längsachse der miteinander zu verbindenden Kettenstrangabschnitte abweichenden Winkelposition in das Endglied des zweiten Kettenstrangabschnittes einhängbar ist.

Aus der DE 16 80 478 ist eine Reifenkette der vorstehenden Art bekannt, bei der sich das ovale Endglied eines Kettenstrangabschnittes in ein im wesentlichen T-förmiges Verankerungsstück eines Verbindungselementes einhängen läßt. In diesem Fall ist das Joch des T-förmigen Verankerungsstückes senkrecht zur Längsachse des Endgliedes in der gekoppelten Position der Kettenstrangabschnitte orientiert. Da das Joch im gekoppelten Zustand der Kettenstrangabschnitte beide Schenkel des in das Verbindungselement eingehängten Endgliedes übergreifen muß, bedarf es beim Koppeln von Kettenstrangabschnitten aus Gliedern mit einer Teilung t von weniger als 4d nicht nur einer Schwenkung der einzuhängenden Endglieder um 90°, sondern die auf das Endglied folgenden Kettenglieder müssen gleichzeitig von der Lauffläche des Reifens abgehoben werden und eine die Einschwenkbewegung des Endgliedes ermöglichende Hilfsbewegung ausführen. Dies bedeutet, daß der im Bereich der Fügestelle erforderliche Bewegungsspielraum vergleichsweise groß sein muß. Hinzu kommt, daß der Hals des T-förmigen Verankerungsstückes einen an die innere Breite des ovalen Endgliedes angepaßten Durchmesser haben muß, um das um 90° geschwenkte Endglied in seine Ausgangslage zurückschwenken zu können. Die im wesentlichen zylindrische Ausbildung des Halses macht zusätzliche Mittel erforderlich, um ungewollte Schwenkbewegungen des Endgliedes und dessen Aushängen zu verhindern.

Der Erfindung liegt die Aufgabe zugrunde, eine Reifenkette der in Betracht gezogenen Art so auszugestalten, daß eine Kopplung von Kettengliedern auch dann möglich ist, wenn deren Beweglichkeit im Bereich der Füge- bzw. Teilungsstelle enge Grenzen gesetzt sind. Diese Aufgabe wird erfindungsgemäß dadurch gelöst, daß das Endglied des zweiten Kettenstrangabschnittes drei über Buge miteinander verbundene Schenkel aufweist, daß der Kopf des Verankerungsstückes in der Draufsicht betrachtet im wesentlichen die Form eines Trapezes hat, dessen Grundlinie gegenüber der Längsachse des Verbindungselementes einen Winkel von weniger als 90° einnimmt, und daß das Verankerungsstück unterhalb seines Kopfes eine senkrecht zur Längsachse des Verbindungselementes orientierte Stützfläche für einen Schenkel des Endgliedes des zweiten Kettenstrangabschnittes aufweist.

Die erfindungsgemäße Reifenkette bietet den Vorteil, daß ihre Kettenstrangabschnitte gewissermaßen auf engstem Raum zusammengefügt und bei Bedarf wieder getrennt werden können. Es bedarf lediglich einer kurzen Linearbewegung und einer Schwenkung des triangelförmigen Endgliedes um weniger als 90°, um es in das Verbindungselement einhängen bzw. aus diesem aushängen zu können. In der Praxis bedeutet dies, daß die für das Zusammenfügen und Trennen der Kettenstrangabschnitte erforderliche Abstandsänderung zwischen den zu koppelnden Kettengliedern kleiner als die halbe Teilung der Kettenglieder sein kann. Hinzu kommt, daß die Form des Endgliedes und der Stützfläche des Verankerungsstückes besondere Lagesicherungselemente entbehrlich macht.

Weitere Merkmale und Einzelheiten der Erfindung ergeben sich aus den Unteransprüchen und der nachfolgenden Beschreibung einer in der beigefügten Zeichnung dargestellten Ausführungsform der Erfindung. Es zeigen:
Fig. 1 die Seitenansicht der Füge- bzw. Teilungsstelle einer Reifenkette beim Einhängen eines Endgliedes,
Fig. 2 die Draufsicht auf Fig. 1,
Fig. 3 die Seitenansicht der Füge- bzw. Teilungsstelle in einer Zwischenposition des Kopplungsvorganges,
Fig. 4 die Draufsicht auf Fig. 3,
Fig. 5 die Seitenansicht der Füge- bzw. Teilungsstelle nach Abschluß des Kopplungsvorganges und
Fig. 6 die Draufsicht auf Fig. 5.

In den Figuren sind 1 und 2 zwei miteinander im Bereich der Füge- bzw. Teilungsstelle einer Reifenkette zu koppelnde Kettenstrangabschnitte. Das Endglied 3 des Kettenstrangabschnittes 1 ist im dargestellten Fall in eine Öse 4 eines Verbindungselementes 5 eingeschweißt. Es ist wie die übrigen Glieder des Kettenstrangabschnittes 1 als ovales Rundstahlglied mit einer Teilung t von weniger als der vierfachen Glieddicke d ausgebildet.

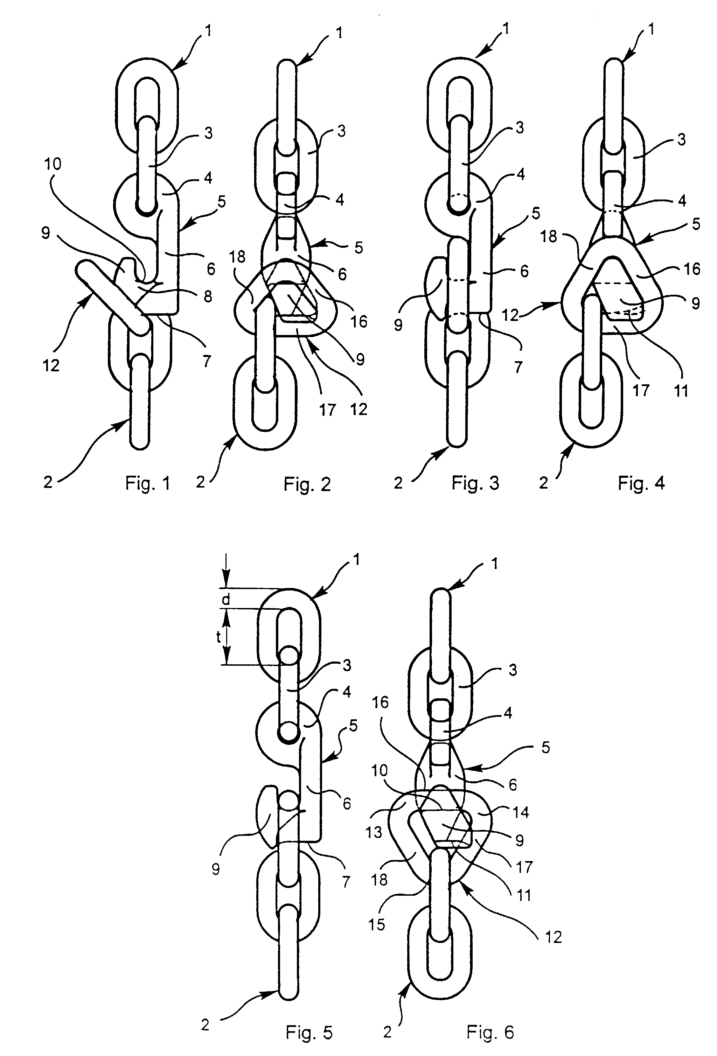

Die Öse 4 des Verbindungselementes 5 steht über ein Rückenteil 6 mit einem Verankerungsstück 7 in Verbindung, das eine Art Hals 8 und einen Kopf 9 aufweist. Wie aus den Figuren 4 und 6 erkennbar, hat der Kopf 9 eine im wesentlichen trapezförmige Außenkontur, während der Hals 8 an seiner der Öse 4 zugewandten Seite mit einer teilzylindrischen Stützfläche 10 und an seiner der Öse 4 abgewandten Seite mit einer bogenförmigen "Abwälzfläche" 11 versehen ist.

Das Endglied 12 des Kettenstrangabschnittes 2 besitzt drei über Buge 13,14,15 miteinander verbundene gerade Schenkel 16, 17, 18. Da die Schenkel 16, 17, 18 jeweils die gleiche Länge haben, hat das Endglied 12 im wesentlichen die Form eines gleichschenkligen Dreieckes.

Um das Endglied 12 in das Verbindungselement 5 einhängen zu können, bedarf es lediglich einer kurzen Linearbewegung des Kettenstrangabschnittes 2 in Richtung seiner Längsachse, um anschließend das Endglied 12 um etwa 45° in die Kopplungsposition schwenken zu können. Sobald das Endglied 12 den Kopf 9 des Verankerungsstückes 7 passiert hat, läßt es sich in seine Ausgangslage zurückschwenken, in der sein Schenkel 16 gegen die ihn partiell umschließende Stützfläche 10 anliegt und auf diese Weise ungewollte Aushängebewegungen verhindert werden.

## Patentansprüche

1. Reifenkette, insbesondere Gleitschutzkette mit Kettenstrangabschnitten (1,2), deren Endglieder (3,12) im Bereich mindestens einer Füge- bzw. Teilungsstelle durch ein Verbindungselement (5) miteinander koppelbar sind, das eine Anschlußöse (4) für das Endglied (3) eines ersten Kettenstrangabschnittes (1) und ein mit der Anschlußöse (4) über ein Rükkenteil verbundenes mit einem Kopf versehenes Verankerungsstück (7) aufweist, welch letzteres in einer von der gemeinsamen Längsachse der miteinander zu verbindenden Kettenstranggabschnitte (1,2) abweichenden Winkelposition in das Endglied (12) des zweiten Kettenstrangabschnittes (2) einhängbar ist, **dadurch gekennzeichnet**, daß das Endglied (12) des zweiten Kettenstrangabschnittes (2) drei über Buge (13,14,15) miteinander verbundene Schenkel (16,17,18) aufweist, daß der Kopf (9) des Verankerungsstückes (7) in der Draufsicht betrachtet im wesentlichen die Form eines Trapezes hat, dessen Grundlinie gegenüber der Längsachse des Verbindungselementes (5) einen Winkel von weniger als 90° einnimmt, und daß das Verankerungsstück (7) unterhalb seines Kopfes (9) eine senkrecht zur Längsachse des Verbindungselementes (5) orientierte Stützfläche (10) für einen Schenkel (16) des Endgliedes (12) des zweiten Kettenstrangabschnittes (2) aufweist.

2. Reifenkette nach Anspruch 1, **dadurch gekennzeichnet**, daß der Kopf (9) im gekoppelten Zustand der Kettenstrangabschnitte (1,2) zwei Schenkel (16,17) des Endgliedes (12) des zweiten Kettenstrangabschnittes (2) partiell überragt.

3. Reifenkette nach Anspruch 1 oder 2, **dadurch gekennzeichnet**, daß der Rückenteil (6) des Verbindungselementes (5) eine Breite hat, die im wesentlichen gleich der Länge der Schenkel (16,17,18) des Endgliedes (12) des zweiten Kettenstrangabschnittes (2) ist.

4. Reifenkette nach einem oder mehreren der Ansprüche 1 bis 3, **dadurch gekennzeichnet**, daß die Glieder der zu koppelnden Kettenstrangabschnitte (1,2) als Rundstahlglieder ausgebildet sind.

5. Reifenkette nach einem oder mehreren der Ansprüche 1 bis 4, **dadurch gekennzeichnet**, daß die Teilung t der Glieder der zu koppelnden Kettenstrangabschnitte (1,2) kleiner als die vierfache Dicke d der Glieder ist.
